# EUROPEAN PATENT SPECIFICATION

(11) **EP 4 042 791 B1**
(45) Date of publication and mention of the grant of the patent: **04.09.2024**
(21) Application number: 20891299.8
(22) Date of filing: 20.11.2020
(51) Int. Cl.: H04W 72/04, H04L 1/00, H04L 1/18

(54) **METHOD FOR CONFIGURATION OF HARQ-ACK FEEDBACK**
VERFAHREN ZUR KONFIGURATION VON HARQ-ACK-RÜCKKOPPLUNG
PROCÉDÉ DE CONFIGURATION DE RÉTROACTION D'ACCUSÉ DE RÉCEPTION NÉGATIF DE DEMANDE DE RAPPORT AUTOMATIQUE HYBRIDE (HARQ-ACK)

(30) Priority: 21.11.2019 US 201962938950 P
(43) Date of publication of application: 17.08.2022
(73) Proprietor: GUANGDONG OPPO MOBILE TELECOMMUNICATIONS CORP., LTD., Dongguan, Guangdong 523860 (CN)
(72) Inventor: LIN, Hao, 92200 Neuilly-sur-Seine (FR); WU, Zuomin, Dongguan, Guangdong 523860 (CN)
(74) Representative: Ipside
(86) International application number: PCT/CN2020/130674
(87) International publication number: WO 2021/098862

(56) References cited:
- EP-A1- 4 057 537
- WO-A1-2018/137206
- WO-A1-2021/087980
- CN-A- 103 220 072
- CN-A- 109 075 903
- US-A1- 2018 097 606
- US-A1- 2018 310 333
- XIAOMI: "Discussion on HARQ enhancement for NR-U", vol. RAN WG1, no. Reno, USA; 20191118 - 20191122, 8 November 2019 (2019-11-08), XP051819887, Retrieved from the Internet <URL:https://ftp.3gpp.org/tsg_ran/WG1_RL1/TSGR1_99/Docs/R1-1911992.zip R1-1911992 Discussion on HARQ enhancement for NR-U.doc> [retrieved on 20191108]
- HUAWEI ET AL: "HARQ enhancement in NR unlicensed", vol. RAN WG1, no. Reno, USA; 20191118 - 20191122, 9 November 2019 (2019-11-09), XP051823050, Retrieved from the Internet <URL:https://ftp.3gpp.org/tsg_ran/WG1_RL1/TSGR1_99/Docs/R1-1911868.zip R1-1911868.docx> [retrieved on 20191109]
- QUALCOMM INCORPORATED: "Enhancements to Scheduling and HARQ operation for NR-U R1-1911099", 3GPP DRAFT; R1-1911099 7.2.2.2.3 ENHANCEMENTS TO SCHEDULING AND HARQ OPERATION FOR NR-U, vol. RAN WG1, 5 October 2019 (2019-10-05), Chongqing, CN, pages 1 - 17, XP051789876
- HUAWEI: "Feature lead summary of HARQ enhancements for NR-U R1-1907652", 3GPP DRAFT; R1-1907652 FEATURE LEAD SUMMARY FOR 7.2.2.2.3 NRU HARQ RAN97V3, vol. RAN WG1, 16 May 2019 (2019-05-16), Reno, USA, pages 1 - 22, XP051739941

## Description

### TECHNICAL FIELD

The present invention relates to next generation mobile communication, in particular to the configuration of HARQ-ACK feedback configuration for one-shot HARQ feedback in NR-U.

### BACKGROUND

Part of the development of New Radio (NR) technology is that in addition to conventionally used licensed spectrum also an unlicensed spectrum is used; this aspect of NR technology is called NR-U.

While in the licensed spectrum, a frequency or a range of frequencies is clearly attributed to a specific service and that service alone, i.e. to a given communication system equipped with the authorization to use this frequency or range of frequencies, this is not the case for the unlicensed spectrum.

The unlicensed spectrum is a shared spectrum, that is, different from the licensed spectrum, use thereof is not restricted to communication system equipped with an authorization. In contrast, the communication equipment in different communication systems can use the spectrum as long as it meets the regulatory requirements set by the country or region on the spectrum and does not need to apply for a proprietary spectrum authorization from the government.

While this clearly has certain advantages, such as the possibility to increase the used bandwidth as desired and required, this advantage does not come without a price. Due to the uncertainty which parties are intending to use or are using the unlicensed spectrum, it is likely to come to overlaps. Such overlaps clearly represent a performance and reliability issue and thus have to be addressed appropriately.

In order to allow various communication systems using the unlicensed spectrum for wireless communication to coexist friendly in said part of the spectrum, regulatory requirements can present a solution. In fact, some countries or regions specify regulatory requirements that must be met to use the unlicensed spectrum. One example of such a regulatory requirement is the principle of "Listen Before Talk" (LBT). This principle requires that the device needs to perform channel sensing before transmitting the signal on the channel. Only when the LBT outcome shows that the channel is idle, the device can perform signal transmission; otherwise, the device cannot perform signal transmission. Moreover, to ensure fairness and to avoid that a device uses a channel indefinitely, that is, effectively blocks the channel, once a devices successfully occupies the channel, the transmission duration cannot exceed the Maximum Channel Occupancy Time (MCOT).

The document XIAOMI: "Discussion on HARQ enhancement for NR-U", 3GPP DRAFT; R1-1911992, 3RD GEBERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Reno, USA; 20191118-20191122 8 November 2019 (2019-11-08) presents the discussion on HARQ enhancement for NR-U operation. The document HUAWEI ET AL: "HARQ enhancement in NR unlicensed", 3GPP DRAFT; R1-1911868, 3RD GEBERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE vol. RAN WG1, no. Reno, USA; 20191118-20191122 9 November 2019 (2019-11-09) discusses HARQ enhancements in NR-U through enhanced HARQ-ACK feedback mechanisms supporting triggered HARQ-ACK feedback, multiple HARQ-ACK feedback opportunities in both time and frequency domain, HARQ-ACK codebook size determination and multi-TTI scheduling.

WO 2021/087980 A1 provides method and apparatus for determining one shot HARQ-ACK codebook.

EP 4057537 A1 provides method and device for transmitting or receiving signal in wireless communication system.

US 20180097606 provides a method of wireless communication using half duplex frequency division duplex.

US 2018/310333 A1 discloses bundling of HARQ-ACK feedback.

### SUMMARY

The scope of protection of the invention is defined in independent claims 1 and 11.

### DESCRIPTION OF THE DRAWINGS

Aspects of the present invention, which are present for better understanding the inventive concepts but which are not to be seen as limiting the invention, will now be described with reference to the figures in which:
Fig. 1 shows an example of a wireless communication network.
Fig. 2 shows an exemplary configuration of a user equipment.

### DETAILED DESCRIPTION

In NR-U, a user equipment (UE) can be configured with one-shot Hybrid Automatic Repeat Request (HARQ) feedback. HARQ is a combination of high-rate forward error-correcting code with Automatic Repeat Request (ARQ), error-control. One-shot HARQ refers to a situation in which the feedback provided to a HARQ request is no provided one-by-one for each request but instead the feedback of a number of requests is bundled and provided together in one transmission, hence the name "one-shot".

In other words, the present disclosure includes a method of operating a user equipment, the method comprising: receiving a Physical Downlink Shared Channel, PDSCH, transmission and transmitting a Hybrid Automatic Report Request, HARQ, feedback in response to the PDSCH transmission, wherein the HARQ feedback comprises a one-shot HARQ feedback.

More specifically, there are two types of one-shot HARQ feedback based on whether a New Data Identifier (NDI) is configured to be part of one-shot HARQ feedback or not. This NDI is a value indicating whether the transmitted data is new data or whether the transmitted data is retransmitted data. The two types of one-shot HARQ feedback are:
- Type A: NDI is configured to be part of one-shot HARQ feedback.

In this case, the latest NDI value detected by the UE is reported along with HARQ-ACK (ACK standing for 'acknowledgment') for the corresponding HARQ process ID. The UE assumes NDI=0 if there is no prior NDI value for the HARQ process.
- Type B: NDI is not configured to be part of one-shot HARQ feedback.

In this case, NDI value is not reported along with HARQ-ACK for the corresponding PDSCH. UE is expected to reset HARQ-ACK state, either as discontinuous transmission (DTX) or negative acknowledgement (NACK), for a HARQ process ID once ACK is reported for the same HARQ process ID in the previous feedback.

In other words, the method disclosed in the present disclosure may optionally be configured such that the one-shot HARQ feedback comprises at least one of the following two types: a first type in which a NDI is part of the one-shot HARQ feedback and a second type in in which the NDI is not part of the one-shot HARQ feedback.

Moreover, the method disclosed in the present disclosure is configured such that the NDI value is reported along with the HARQ-ACK.

Furthermore, the method disclosed in the present disclosure may optionally be configured such that the configuration in which the NDI is not part of the one-shot HARQ feedback is used.

In Type A, if the maximum number of codewords for downlink transmission is two, two NDIs should be reported along with corresponding HARQ-ACKs for the corresponding HARQ process ID.

In other words, the method disclosed in the present disclosure may optionally be configured such that the maximum number of codewords is two and two New Data Identifier (NDI), are reported.

However, how to perform one-shot HARQ feedback if spatial bundling for HARQ feedback is configured is not discussed. Spatial bundling refers to bundling across multiple codewords within a subframe or in other words bundling of HARQ-ACK feedback for the PDSCH codewords corresponding to different spatially multiplexed streams.

In other words, the method disclosed in the present disclosure may optionally be configured such that the spatial bundling is configured for the HARQ feedback.

The present disclosure addresses this issue, among others. Particularly, the present disclosure includes at least parts of the following contents.

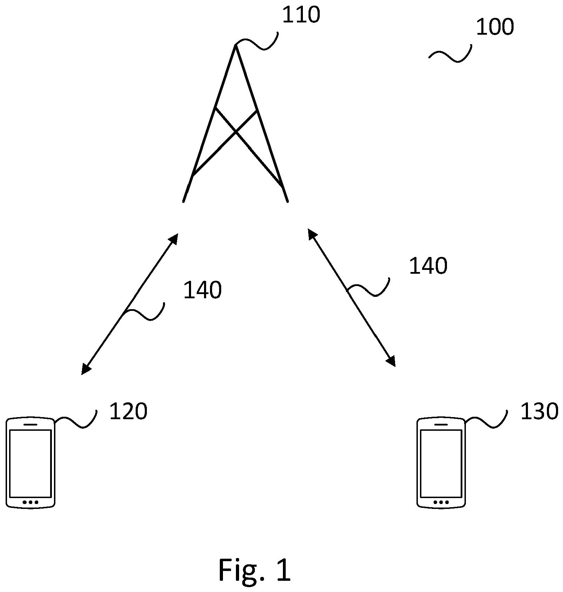

Fig. 1 shows an example of a wireless communication network 100 comprising one network node 110, a UE 120, and a UE 130. A network node and a UE may generally be considered a device or node adapted for wireless and/or radio (and/or microwave) frequency communication, and/or for communication utilizing an air interface, e.g. according to a communication standard. The network node 110 may be any kind of network device or radio node of a wireless communication network, such as a base station and/or eNodeB (eNB) and/or gNodeB (gNB) and/or relay node and/or micro or nano or pico or femto node and/or other node. The exemplary wireless communication network 100 of Fig. 1 comprises one network node and two UEs. This is, however, not limiting and the wireless communication network 100 may comprise more or less network nodes and UEs.

The UEs 120 and 130 may represent an end device for communication utilizing the wireless communication network, and/or be implemented as a UE according to a communication standard such as LTE, NR, NR-U or the like. Examples of UEs may comprise a phone such as a smartphone, a personal communication device, a mobile phone or terminal, a computer, in particular a laptop, a sensor or a machine with radio capability (and/or adapted for the air interface), in particular for MTC (Machine-Type-Communication, sometimes also referred to M2M, Machine-To-Machine), D2D (Device-to-Device), a RSU (Road Side Unit), or a vehicle adapted for wireless communication. A UE or terminal may be mobile or stationary.

The network node 110 is able to send any kind of Downlink (DL) data to the UEs 120 and 130 via communication links 140 and the UEs 120 and 130 are able to send any kind of Uplink (UL) data to the network node 110 via communication links 140 (such as LTE, NR, NR-U or the like).

Signaling may generally comprise one or more signals and/or one or more symbols. Control information or a control information message or corresponding signaling (control signaling) may be transmitted on a control channel, e.g. a physical control channel, which may be a downlink channel. Acknowledgement signaling, e.g. as a form of HARQ feedback reporting, may be transmitted by a UE 120 or 130 on a PUCCH (Physical Uplink Control Channel) and/or PUSCH (Physical Uplink Shared Channel) and/or a HARQ-specific channel to the network node 110.

Specifically, if both of the UEs 120 and 130 do not use the licensed spectrum, but instead use the unlicensed spectrum for communication with the network node 110, there is the need for ensuring that the two UEs 120 and 130 do not interfer with each other and thus hinder communication altogether. To this end, Listen Before Talk (LBT) can provide a solution by ensuring that no channel is used by a UE that is already in use by another UE.

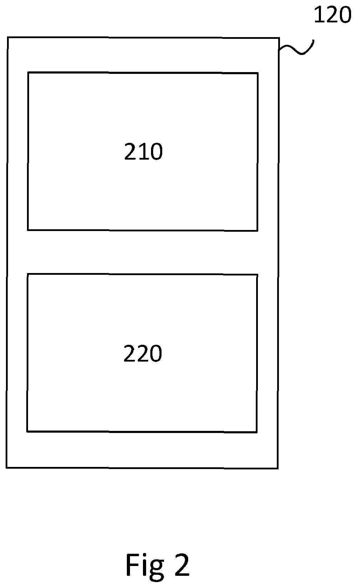

Fig. 2 shows an exemplary configuration for the UE 120. The configuration for the UE 130 is the same as for UE 120 and a detailed description about the configuration for the UE 130 is here omitted for conciseness. The UE 120 may comprise a processor 210 and a memory 220. The processor 210 may be a processing circuitry (which may also be referred to as control circuitry) which may comprise a controller connected to the memory 220. Any module of the UE 120, e.g. a communication module or determining module, may be implemented in and/or executable by, the processing circuitry 210, in particular as module in the controller. The UE 120 may also comprise radio circuitry (not shown) providing receiving and transmitting or transceiving functionality, e.g. one or more transmitting sections and/or receivings sections and/or transceivers, wherein the radio circuitry is connected or connectable to the processing circuitry 210. An antenna circuitry (not shown) of the UE 120 may be connected or connectable to the radio circuitry to collect or send and/or amplify signals. The UE 120 may be adapted to carry out any of the methods for operating the user equipment disclosed herein; in particular, it may comprise corresponding circuitry, e.g. processing circuitry, and/or modules.

In NR, the UE can be configured with spatial bundling of HARQ-ACK feedback. If spatial bundling of HARQ-ACK feedback is configured, UE reports one HARQ-ACK information bit for two codewords.

In other words, the method disclosed in the present disclosure is configured such that two independent NDI are reported with the spatial bundled HARQ-ACK.

In other words, the method disclosed in the present disclosure is further configured such that the HARQ feedback reports one bit of HARQ information for two codewords.

As an example, if the two codewords both correspond to "ACK", the UE shall report "ACK"; if at least one codeword corresponds to "NACK", the UE shall report "NACK".

In other words, the method disclosed in the present disclosure may be configured such that if at least one of the codewords is a NACK, the transmitted HARQ feedback is NACK.

This method therefore can be used to reduce the reported HARQ-ACK information bits.

In Type A one-shot HARQ feedback, if the maximum number of codewords for downlink transmission is two, two NDIs should be reported along with corresponding HARQ-ACKs for the corresponding HARQ process identifier (ID).

However, if spatial bundling for HARQ feedback is configured as well, at least one of the following options can be supported:
- Option 1: two independent NDIs are reported along with the spatial bundled HARQ-ACK for the corresponding HARQ process ID.
- Option 2: the configuration of spatial bundling is ignored, e.g. two independent NDIs are reported along with the corresponding HARQ-ACKs for the corresponding HARQ process ID.
- Option 3: the NDI value is not reported along with HARQ-ACK for the corresponding HARQ process ID, e.g. the spatially bundled HARQ-ACK for the corresponding HARQ process ID is reported.
- Option 4: Type B one-shot HARQ feedback is used, e.g. the HARQ-ACKs for the corresponding HARQ process ID are reported.
- Option 5: two independent NDIs are reported along with repeated spatially bundled HARQ-ACK for two codewords for the corresponding HARQ process ID.

In other words, the method disclosed in the present disclosure may be configured such that the configuration of spatial bundling is ignored.

Put differently, the method disclosed in the present disclosure may be configured such that two independent NDI are reported along with the repeated spatial bundled HARQ-ACK for two codewords.

A further optional configuration is that the configuration of spatial bundling does not apply to Type A one-shot HARQ feedback and/or Type B one-shot HARQ feedback.

In other words, the method disclosed in the present disclosure may be configured such that the configuration of spatial bundling does not apply to the types of one-shot HARQ feedback in which the NDI is part of the one-shot HARQ feedback.

Another further optional configuration is that the configuration of spatial bundling applies to at least one of the following HARQ feedback types: semi-static HARQ feedback (or Type-1 HARQ-ACK codebook), dynamic HARQ feedback (or Type-2 HARQ-ACK codebook), enhanced group based dynamic HARQ feedback (or enhanced Type-2 HARQ-ACK codebook).

In other words, the method disclosed in the present disclosure may be configured such that the configuration of spatial bundling applies to at least one of the following HARQ feedback types: semi-static HARQ feedback, dynamic HARQ feedback, and enhanced group based dynamic HARQ feedback.

Another optional configuration would be that the UE is not expected to be configured with Type A one-shot HARQ feedback and spatial bundling for HARQ feedback simultaneously.

In other words, the method disclosed in the present disclosure may be configured such that the first type of one-shot HARQ feedback and spatial bundling are not used simultaneously.

Moreover, in another optional configuration, all the options in the present disclosure can be included in a configuration of Radio Resource Control (RRC), if there is not mutual exclusion thereof.

In other words, the method disclosed in the present disclosure may be configured such that the method is RRC configured.

Alternative configurations of the method disclosed in the present disclosure include the following configurations.

The method disclosed in the present disclosure may be configured such that the PDSCH transmission corresponds to a HARQ process ID.

The method disclosed in the present disclosure may be configured such that the PDSCH transmission comprises an amount of codewords or an amount of transport blocks.

The method disclosed in the present disclosure may be configured such that the amount of codewords or transport blocks comprises at least one or two.

The method disclosed in the present disclosure may be configured such that the one-shot HARQ feedback comprises an HARQ-ACK codebook, wherein the HARQ-ACK codebook comprises at least one of the followings: a first HARQ-ACK information bit or a second HARQ-ACK information bit, and wherein the first and/or the second HARQ-ACK information bit are for the HARQ process ID.

The method disclosed in the present disclosure may be configured such that the first HARQ-ACK information bit comprises at least one of the followings: a first type of HARQ-ACK information bit and a second type of HARQ-ACK information bit.

The method disclosed in the present disclosure may be configured such that wherein the first type of HARQ-ACK information bit comprises an HARQ-ACK information bit for a first codeword or for a first transport block of the HARQ process ID.

The method disclosed in the present disclosure is configured such that the second type of HARQ-ACK information bit comprises: a binary AND operation of an HARQ-ACK information bit for a first codeword or a first transport block of the HARQ process ID and an HARQ-ACK information bit for a second codeword or a second transport block of the HARQ process ID.

The method disclosed in the present disclosure may be configured such that the second HARQ-ACK information bit comprises an HARQ-ACK information bit for the second codeword or the second transport block of the HARQ process ID.

The method disclosed in the present disclosure may be configured such that the first HARQ-ACK information bit is the second type of HARQ-ACK information bit when a first parameter is configured.

The method disclosed in the present disclosure may be configured such that the first HARQ-ACK information bit is the first type of HARQ-ACK information bit when the first parameter is not configured.

The method disclosed in the present disclosure may be configured such that the first parameter is relevant to spatial bundling.

The method disclosed in the present disclosure may be configured such that the HARQ-ACK codebook comprises the second HARQ-ACK information bit, when the first parameter is not configured.

The method disclosed in the present disclosure may be configured such that the HARQ-ACK codebook may be configured to further comprise a first New Data Identifier (NDI) value and/or a second NDI value corresponding to the HARQ process ID.

The method disclosed in the present disclosure may be configured such that the first and/or the second NDI values are indicated in a DCI format scheduling the PDSCH transmission.

The method disclosed in the present disclosure may be configured such that the first NDI value is for the first codeword or the first transport block.

The method disclosed in the present disclosure may be configured such the second NDI value is for the second codeword or the second transport block.

The method disclosed in the present disclosure may be configured such the first HARQ-ACK information bit is the first type of HARQ-ACK information bit when the first parameter is not configured and the HARQ-ACK codebook is configured to comprise the first NDI value and/or the second NDI value.

The scope of protection of the invention is defined in the appended set of claims.

## Claims

1. A method of operating a user equipment (120, 130), comprising:
receiving a Physical Downlink Shared Channel, named PDSCH hereinafter, transmission, wherein the PDSCH transmission comprises an amount of transport blocks; and
transmitting a Hybrid Automatic Report Request, named HARQ hereinafter, feedback in response to the PDSCH transmission,
wherein the HARQ feedback comprises a one-shot HARQ feedback, the one-shot HARQ feedback is feedback of multiple HARQs bundled together in one transmission, the one-shot HARQ feedback comprises first HARQ-ACK information bit and a second HARQ-ACK information bit,
and the first HARQ-ACK information bit is a second type of HARQ-ACK information bit, wherein the second type of HARQ-ACK information bit comprises:
a binary AND operation of an HARQ-ACK information bit for a first transport block of a HARQ process ID and an HARQ-ACK information bit for a second transport block of the HARQ process ID,
the transport blocks in the PDSCH transmission comprises the first transport block and the second transport block, the maximum number of the transport blocks is two, and a New Data Indicator, NDI, is a value indicating whether transmitted data is new data or whether the transmitted data is retransmitted data, and
**characterized in that** the one-shot HARQ-ACK feedback is configured to further comprise a first NDI value and a second NDI value corresponding to the HARQ process ID and to the first and second transport block, respectively,
and wherein the one-shot HARQ
is a second type in which the first NDI value and the second NDI value are reported with the spatial bundled HARQ-ACK for the first transport block and the second transport block.

2. The method according to claim 1,
**characterized in that** the PDSCH transmission corresponds to a HARQ process identifier, named ID hereinafter.

3. The method according to claim 1 or 2,
wherein the amount of transport blocks is two.

4. The method according to claim 1,
**characterized in that** the first and/or the second NDI values are indicated in a DCI format scheduling the PDSCH transmission.

5. The method according to claim 1,
**characterized in that** the spatial bundling is configured for the HARQ feedback.

6. The method according to claim 1 or 5,
**characterized in that** the HARQ feedback reports one bit of HARQ information for two transport blocks.

7. The method according to claim 6,
**characterized in that** if at least one of the transport blocks is a NACK, a transmitted HARQ feedback is NACK.

8. The method according to claim 1,
**characterized in that**
the two NDIs are reported along with a repeated spatial bundled HARQ-ACK for two transport blocks.

9. The method according to any one of claims 1 and 5 to 8,
**characterized in that** the configuration of the spatial bundling applies to at least one of the following HARQ feedback types: semi-static HARQ feedback, dynamic HARQ feedback, and enhanced group based dynamic HARQ feedback.

10. The method according to any one of claims 1 and 5 to 9,
**characterized in that** the method is included in a configuration of Radio Resource Control, named RRC hereinafter, configured.

11. A user equipment (120, 130), comprising:
a receiving section configured to receive a Physical Downlink Shared Channel, named PDSCH hereinafter, transmission, wherein the PDSCH transmission comprises an amount of transport blocks; and
a transmitting section configured to transmit a Hybrid Automatic Report Request, named HARQ hereinafter, feedback in response to the PDSCH transmission,
wherein the HARQ feedback comprises a one-shot HARQ feedback, the one-shot HARQ feedback is feedback of multiple HARQs bundled together in one transmission, the one-shot HARQ feedback comprises a first HARQ-ACK information bit and a second HARQ-ACK information bit,
and the first HARQ-ACK information bit is a second type of HARQ-ACK information bit, wherein the second type of HARQ-ACK information bit comprises:
a binary AND operation of an HARQ-ACK information bit for a first transport block of the HARQ process ID and an HARQ-ACK information bit for a second transport block of the HARQ process ID,
the transport blocks in the PDSCH transmission comprises the first transport block and the second transport block, the maximum number of the transport blocks is two, and the New Data Indicator, NDI, is a value indicating whether transmitted data is new data or whether the transmitted data is retransmitted data, and
**characterized in that** the one-shot HARQ-ACK feedback is configured to further comprise a first NDI value and a second NDI value corresponding to the HARQ process ID and to the first and second transport block, respectively, and wherein the one-shot HARQ feedback
is a second type in which the first NDI value and the second NDI value are reported with the spatial bundled HARQ-ACK for the first transport block and the second transport block.

## Patentansprüche

1. Verfahren zum Betreiben einer Benutzerausrüstung (120, 130), umfassend:
Empfangen einer Übertragung eines physikalischen, gemeinsam genutzten Abwärtsstreckenkanals, im Folgenden als PDSCH bezeichnet, wobei die PDSCH-Übertragung eine Anzahl von Transportblöcken umfasst; und
Übertragen einer Rückmeldung einer Anforderung eines hybriden automatischen Berichts, im Folgenden als HARQ bezeichnet, als Reaktion auf die PDSCH-Übertragung,
wobei die HARQ-Rückmeldung eine einmalige HARQ-Rückmeldung umfasst, die einmalige HARQ-Rückmeldung eine Rückmeldung von mehreren HARQs ist, die in einer Übertragung gebündelt werden, die einmalige HARQ-Rückmeldung ein erstes HARQ-ACK-Informationsbit und ein zweites HARQ-ACK-Informationsbit umfasst,
und das erste HARQ-ACK-Informationsbit ein zweiter Typ von HARQ-ACK-Informationsbit ist, wobei der zweite Typ von HARQ-ACK-Informationsbit umfasst:
eine binäre UND-Operation eines HARQ-ACK-Informationsbits für einen ersten Transportblock einer HARQ-Verarbeitungs-ID und eines HARQ-ACK-Informationsbits für einen zweiten Transportblock der HARQ-Verarbeitungs-ID,
wobei die Transportblöcke in der PDSCH-Übertragung den ersten Transportblock und den zweiten Transportblock umfassen, die maximale Anzahl der Transportblöcke zwei ist und ein Indikator neuer Daten, NDI, ein Wert ist, der angibt, ob übertragene Daten neue Daten sind oder ob die übertragenen Daten die erneut übertragenen Daten sind, und
**dadurch gekennzeichnet, dass** die einmalige HARQ-ACK-Rückmeldung konfiguriert ist, ferner einen ersten NDI-Wert und einen zweiten NDI-Wert korrespondierend mit der HARQ-Verarbeitungs-ID und mit dem ersten bzw. zweiten Transportblock zu umfassen,
und wobei die einmalige HARQ ein zweiter Typ ist, in dem der erste NDI-Wert und der zweite NDI-Wert mit der räumlich gebündelten HARQ-ACK für den ersten Transportblock und den zweiten Transportblock berichtet werden.

2. Verfahren nach Anspruch 1,
**dadurch gekennzeichnet, dass** die PDSCH-Übertragung mit einem HARQ-Verarbeitungs-Identifikator, im Folgenden als ID bezeichnet, korrespondiert.

3. Verfahren nach Anspruch 1 oder 2,
wobei die Anzahl von Transportblöcken zwei ist.

4. Verfahren nach Anspruch 1,
**dadurch gekennzeichnet, dass** die ersten und/oder die zweiten NDI-Werte in einem DCI-Format, das die PDSCH-Übertragung terminiert, angegeben werden.

5. Verfahren nach Anspruch 1,
**dadurch gekennzeichnet, dass** die räumliche Bündelung für die HARQ-Rückmeldung konfiguriert ist.

6. Verfahren nach Anspruch 1 oder 5,
**dadurch gekennzeichnet, dass** die HARQ-Rückmeldung ein Bit von HARQ-Informationen für zwei Transportblöcke berichtet.

7. Verfahren nach Anspruch 6,
**dadurch gekennzeichnet, dass**, wenn mindestens einer der Transportblöcke eine NACK ist, eine übertragene HARQ-Rückmeldung eine NACK ist.

8. Verfahren nach Anspruch 1,
**dadurch gekennzeichnet, dass** die zwei NDIs zusammen mit einer wiederholten räumlich gebündelten HARQ-ACK für zwei Transportblöcke berichtet werden.

9. Verfahren nach einem der Ansprüche 1 und 5 bis 8,
**dadurch gekennzeichnet, dass** die Konfiguration der räumlichen Bündelung für mindestens eine der folgenden HARQ-Rückmeldungstypen gilt: semistatische HARQ-Rückmeldung, dynamische HARQ-Rückmeldung und erweiterte gruppenbasierte dynamische HARQ-Rückmeldung.

10. Verfahren nach einem der Ansprüche 1 und 5 bis 9,
**dadurch gekennzeichnet, dass** das Verfahren in einer konfigurierten Konfiguration von Funkbetriebsmittelsteuerung, im Folgenden als RRC bezeichnet, enthalten ist.

11. Benutzerausrüstung (120, 130), umfassend:
einen Empfangsabschnitt, konfiguriert zum Empfangen einer Übertragung eines physikalischen, gemeinsam genutzten Abwärtsstreckenkanals, im Folgenden als PDSCH bezeichnet, wobei die PDSCH-Übertragung eine Anzahl von Transportblöcken umfasst; und
einen Übertragungsabschnitt, konfiguriert zum Übertragen einer Anforderung einer Rückmeldung eines hybriden automatischen Berichts, im Folgenden als HARQ bezeichnet, als Reaktion auf die PDSCH-Übertragung,
wobei die HARQ-Rückmeldung eine einmalige HARQ-Rückmeldung umfasst, die einmalige HARQ-Rückmeldung eine Rückmeldung von mehreren HARQs ist, die in einer Übertragung gebündelt sind, die einmalige HARQ-Rückmeldung ein erstes HARQ-ACK-Informationsbit und ein zweites HARQ-ACK-Informationsbit umfasst,
und das erste HARQ-ACK-Informationsbit ein zweiter Typ von HARQ-ACK-Informationsbit ist, wobei der zweite Typ von HARQ-ACK-Informationsbit umfasst:
eine binäre UND-Operation eines HARQ-ACK-Informationsbits für einen ersten Transportblock der HARQ-Verarbeitungs-ID und eines HARQ-ACK-Informationsbits für einen zweiten Transportblock der HARQ-Verarbeitungs-ID,
wobei die Transportblöcke in der PDSCH-Übertragung den ersten Transportblock und den zweiten Transportblock umfassen, die maximale Anzahl der Transportblöcke zwei ist und der Indikator neuer Daten, NDI, ein Wert ist, der angibt, ob übertragene Daten neue Daten sind oder ob die übertragenen Daten die erneut übertragenen Daten sind, und
**dadurch gekennzeichnet, dass** die einmalige HARQ-ACK-Rückmeldung konfiguriert ist, ferner einen ersten NDI-Wert und einen zweiten NDI-Wert korrespondierend mit der HARQ-Verarbeitungs-ID und mit dem ersten bzw. zweiten Transportblock zu umfassen und wobei die einmalige HARQ-Rückmeldung ein zweiter Typ ist, in dem der erste NDI-Wert und der zweite NDI-Wert mit der räumlich gebündelten HARQ-ACK für den ersten Transportblock und den zweiten Transportblock berichtet werden.

## Revendications

1. Procédé de fonctionnement d'un équipement utilisateur (120, 130), comprenant :
la réception d'une transmission de canal physique partagé de liaison descendante, dénommé ci-après PDSCH, dans lequel la transmission de PDSCH comprend un nombre de blocs de transport ; et
la transmission d'un retour d'informations de demande de rapport automatique hybride, dénommée ci-après HARQ, en réponse à la transmission de PDSCH,
dans lequel le retour d'informations de HARQ comprend un retour d'informations de HARQ unique, le retour d'informations de HARQ unique est un retour d'informations de plusieurs HARQ regroupées dans une seule transmission, le retour d'informations de HARQ unique comprend un premier bit d'informations de HARQ-ACK et un second bit d'informations de HARQ-ACK,
et le premier bit d'informations de HARQ-ACK est un second type de bit d'informations de HARQ-ACK, dans lequel le second type de bit d'informations de HARQ-ACK comprend :
une opération binaire ET d'un bit d'informations de HARQ-ACK pour un premier bloc de transport d'un ID de processus de HARQ et d'un bit d'informations de HARQ-ACK pour un second bloc de transport de l'ID de processus HARQ,
les blocs de transport dans la transmission de PDSCH comprennent le premier bloc de transport et le second bloc de transport, le nombre maximum de blocs de transport est de deux, et un nouvel indicateur de données, NDI, est une valeur indiquant que des données transmises sont des nouvelles données ou que les données transmises sont des données retransmises, et
**caractérisé en ce que** le retour d'informations de HARQ-ACK unique est configuré pour comprendre en outre une première valeur de NDI et une seconde valeur de NDI correspondant à l'ID de processus de HARQ et aux premier et second bloc de transport, respectivement,
et dans lequel la HARQ unique est un second type dans lequel la première valeur de NDI et la seconde valeur de NDI sont signalées avec le HARQ-ACK spatial regroupé pour le premier bloc de transport et le second bloc de transport.

2. Procédé selon la revendication 1,
**caractérisé en ce que** la transmission de PDSCH correspond à un identifiant, dénommé ci-après ID, de processus de HARQ.

3. Procédé selon la revendication 1 ou 2,
dans lequel le nombre de blocs de transport est de deux.

4. Procédé selon la revendication 1,
**caractérisé en ce que** les première et/ou seconde valeurs de NDI sont indiquées dans un format de DCI qui ordonnance la transmission de PDSCH.

5. Procédé selon la revendication 1,
**caractérisé en ce que** le regroupement spatial est configuré pour le retour d'informations de HARQ.

6. Procédé selon la revendication 1 ou 5,
**caractérisé en ce que** le retour d'informations de HARQ signale un bit d'informations de HARQ pour deux blocs de transport.

7. Procédé selon la revendication 6,
**caractérisé en ce que** si au moins un des blocs de transport est un NACK, un retour d'informations de HARQ transmis est un NACK.

8. Procédé selon la revendication 1,
**caractérisé en ce que**
les deux NDI sont signalés avec un HARQ-ACK regroupé spatial répété pour deux blocs de transport.

9. Procédé selon l'une quelconque des revendications 1 et 5 à 8,
**caractérisé en ce que** la configuration du regroupement spatial s'applique à au moins un des types de retour d'informations de HARQ suivants : retour d'informations de HARQ semi-statique, retour d'informations de HARQ dynamique et retour d'informations de HARQ dynamique basé sur le groupe amélioré.

10. Procédé selon l'une quelconque des revendications 1 et 5 à 9,
**caractérisé en ce que** le procédé est inclus dans une configuration de commande de ressources radioélectriques, dénommée ci-après RRC, configurée.

11. Equipement utilisateur (120, 130), comprenant :
une section de réception configurée pour recevoir une transmission de canal physique partagé de liaison descendante, dénommé ci-après PDSCH, dans lequel la transmission de PDSCH comprend un nombre de blocs de transport ; et
une section de transmission configurée pour transmettre un retour d'informations de demande de rapport automatique hybride, dénommée ci-après HARQ, en réponse à la transmission de PDSCH,
dans lequel le retour d'informations de HARQ comprend un retour d'informations de HARQ unique, le retour d'informations de HARQ unique est un retour d'informations de plusieurs HARQ regroupées dans une seule transmission, le retour d'informations de HARQ unique comprend un premier bit d'informations de HARQ-ACK et un second bit d'informations de HARQ-ACK,
et le premier bit d'informations de HARQ-ACK est un second type de bit d'informations de HARQ-ACK, dans lequel le second type de bit d'informations de HARQ-ACK comprend :
une opération binaire ET d'un bit d'informations de HARQ-ACK pour un premier bloc de transport d'un ID de processus de HARQ et d'un bit d'informations de HARQ-ACK pour un second bloc de transport de l'ID de processus de HARQ,
les blocs de transport dans la transmission de PDSCH comprend le premier bloc de transport et le second bloc de transport, le nombre maximum de blocs de transport est de deux, et le nouvel indicateur de données, NDI, est une valeur indiquant que des données transmises sont des nouvelles données ou que les données transmises sont des données retransmises, et
**caractérisé en ce que** le retour d'informations de HARQ-ACK unique est configuré pour comprendre en outre une première valeur de NDI et une seconde valeur de NDI correspondant à l'ID de processus de HARQ et aux premier et second bloc de transport, respectivement, et dans lequel le retour d'informations de HARQ unique est un second type dans lequel la première valeur de NDI et la seconde valeur de NDI sont signalées avec le HARQ-ACK spatial regroupé pour le premier bloc de transport et le second bloc de transport.
